# EUROPEAN PATENT SPECIFICATION

(11) **EP 3 614 298 B1**
(45) Date of publication and mention of the grant of the patent: **05.04.2023**
(21) Application number: 19190731.0
(22) Date of filing: 08.08.2019
(51) Int. Cl.: G06K 7/10

(54) **PORTABLE TERMINAL APPARATUS, INFORMATION RECORDING METHOD AND STORAGE MEDIUM**
TRAGBARE ENDGERÄTEVORRICHTUNG, INFORMATIONSAUFZEICHNUNGSVERFAHREN UND SPEICHERMEDIUM
APPAREIL DE TERMINAL PORTABLE, PROCÉDÉ D'ENREGISTREMENT D'INFORMATIONS ET SUPPORT D'ENREGISTREMENT

(30) Priority: 23.08.2018 JP 2018156218
(43) Date of publication of application: 26.02.2020
(73) Proprietor: Casio Computer Co., Ltd., Tokyo 151-8543 (JP)
(72) Inventor: IRIE, Tomonori, Hamura-shi, Tokyo 205-8555 (JP)
(74) Representative: Plougmann Vingtoft a/s

(56) References cited:
- JP-A- 2018 050 278
- US-A1- 2013 306 736
- US-A1- 2018 082 098

## Description

### BACKGROUND OF THE INVENTION

### 1. Field of the Invention

The present invention relates to a portable terminal apparatus, an information recording method and a storage medium.

### 2. Description of the Related Art

Conventionally, various types of handy terminals (portable terminal apparatuses) serving as data collection terminal apparatuses for business use are known. Some of these handy terminals are equipped with a camera and thereby has a function for photographing sales slips and the like in addition to a function for reading barcodes included in sales slips and the like, that is, a function for decoding barcodes and acquiring identification information. Also, for example, in Japanese Patent Application Laid-Open (Kokai) Publication No. 2003-267556, a configuration has been described in which a handy terminal acquires identification information in a barcode included in (printed on, for example) a sales slip or the like from an image acquired by photographing the sales slip, and records the acquired identification information in association with the image. That is, a configuration has been described in which an operation of acquiring an image showing a sales slip or the like is performed concurrently with an operation of reading a barcode thereon. By this configuration, the user of the handy terminal can acquire identification information in a barcode and a captured image showing a sales slip or the like having this barcode simultaneously by only performing a barcode reading operation once.

However, there is a problem in that, when identification information in a barcode and a captured image showing a sales slip or the like having the barcode are to be recorded in association with each other as described above, the barcode may be read but a high-quality image cannot always be acquired as this captured image. This is because even when the quality of the captured image is low, such as when the captured image is an out-of-focus image or a blurred image, the decoding of the barcode (the acquisition of the identification information) can be achieved if the quality of the image is not too low.

### SUMMARY OF THE INVENTION

In order to solve the above-described problem, in accordance with one aspect of the present invention, there is provided a portable terminal apparatus having an imaging section which captures an image of a photographic subject including a barcode and a decoding section which decodes the barcode based on the captured image of the photographic subject captured by the imaging section so as to acquire identification information, a judgment section which judges whether the captured image is suitable as a recording target based on the captured image; and a storage control section which controls a storage section to store the captured image judged to be suitable as a recording target by the judgment section and the identification information acquired by the decoding section in association with each other, characterized by: the decoding section decodes the barcode under a first reading condition so as to acquire the identification information when a first mode in which the storage section is to be controlled to store the identification information without being associated with the captured image has been set as an operation mode, or decodes the barcode under a second reading condition where the captured image is to be acquired at an image resolution higher than a resolution under the first reading condition so as to acquire the identification information when a second mode in which the storage section is to be controlled to store the identification information and the captured image in association with each other has been set as an operation mode.

In accordance with one aspect of the present invention, there is provided an information recording method including a step of capturing an image of a photographic subject and a step of decoding a barcode included in the photographic subject based on the captured image of the photographic subject so as to acquire identification information, a step of judging whether the captured image is suitable as a recording target based on the captured image; and a step of controlling a storage section to store the captured image judged to be suitable as a recording target and the acquired identification information in association with each other, characterized by: in the step of acquiring the identification information, the barcode is decoded under a first reading condition so as to acquire the identification information when a first mode in which the storage section is to be controlled to store the identification information without being associated with the captured image has been set as an operation mode, or the barcode is decoded under a second reading condition where the captured image is to be acquired at an image resolution higher than a resolution under the first reading condition so as to acquire the identification information when a second mode in which the storage section is to be controlled to store the identification information and the captured image in association with each other has been set as an operation mode.

In accordance with one aspect of the present invention, there is provided a non-transitory computer-readable storage medium having a program stored thereon that is executable by a processor in a portable terminal apparatus having an imaging section to actualize functions including processing for controlling the imaging section to capture an image of a photographic subject and processing for decoding a barcode included in the photographic subject based on the captured image of the photographic subject so as to acquire identification information, processing for judging whether the captured image is suitable as a recording target based on the captured image; and processing for controlling a storage section to store the captured image judged to be suitable as a recording target and the acquired identification information in association with each other characterized by: in the processing for acquiring the identification information, the barcode is decoded under a first reading condition so as to acquire the identification information when a first mode in which the storage section is to be controlled to store the identification information without being associated with the captured image has been set as an operation mode, or the barcode is decoded under a second reading condition where the captured image is to be acquired at an image resolution higher than a resolution under the first reading condition so as to acquire the identification information when a second mode in which the storage section is to be controlled to store the identification information and the captured image in association with each other has been set as an operation mode.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

FIG. 1 is a diagram showing a handy terminal according to the present invention and a sales slip;
FIG. 2 is a block diagram showing the handy terminal;
FIG. 3 is a flowchart showing barcode reading processing by the handy terminal;
FIG. 4 is a flowchart showing first decode processing;
FIG. 5 is a flowchart showing second decode processing;
FIG. 6 is a diagram showing barcode reading conditions;
FIG. 7A is a diagram showing a captured image as an example;
FIG. 7B is a diagram showing a binarization processing target area in the captured image, in a sales slip imaging mode;
FIG. 8A is a diagram showing details of barcode edge judgment;
FIG. 8B is a diagram showing details of contrast judgment;
FIG. 9A is a diagram showing an example of a captured image where the width of a barcode is beyond an acceptable range; and
FIG. 9B is a diagram showing an example of a captured image where the orientation of a barcode is beyond an acceptable range

### DETAILED DESCRIPTION OF THE PREFERRED EMBODIMENTS

An embodiment of the present invention will hereinafter be described. In the present embodiment, a case is described in which the present invention has been applied in a handy terminal that is used as a data collection terminal apparatus for business use.

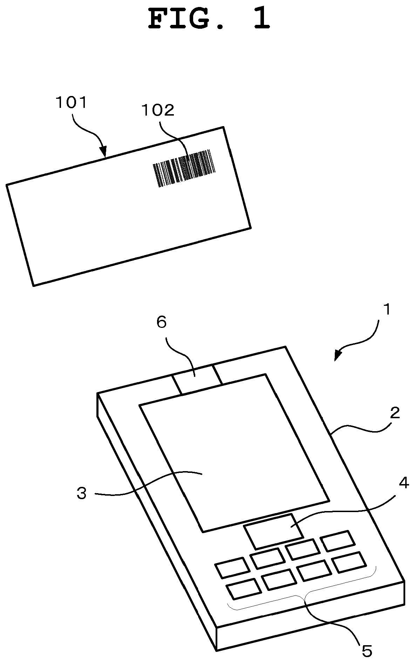

FIG. 1 is a diagram showing a handy terminal 1 (portable terminal apparatus) exemplarily shown as an embodiment of the present invention, and a sales slip 101 (photographic subject, sales slip) that is a target of processing by the handy terminal 1. The handy terminal 1 of the present embodiment acquires identification information in a barcode 102 (barcode) included in (printed on, for example) the sales slip 101 based on an image acquired by photographing the sales slip 101.

The handy terminal 1 includes a case 2 having a rectangular planar shape, a display 3 provided on the upper surface of the case 2, a trigger key 4, a plurality of operation keys 5 other than the trigger key 4, and a camera section 6 provided on an end portion of the case 2 in the longitudinal direction, as shown in FIG. 1. The camera section 6 is mainly used to capture an image of a sales slip for reading a barcode thereon.

The trigger key 4 is an operation key that is used to give an instruction to read a barcode. The plurality of operation keys 5 are used to perform an operation of setting an operation mode in the handy terminal 1, setting operational details, inputting various types of information, and the like. On the display 3, various types of information required to operate the handy terminal 1 and information inputted by the user are displayed. Also, on the display 3, images of a photographic subject sequentially captured (imaged) by the camera section 6 when the handy terminal 1 is being operated in a scanning mode that is a basic operation mode are displayed.

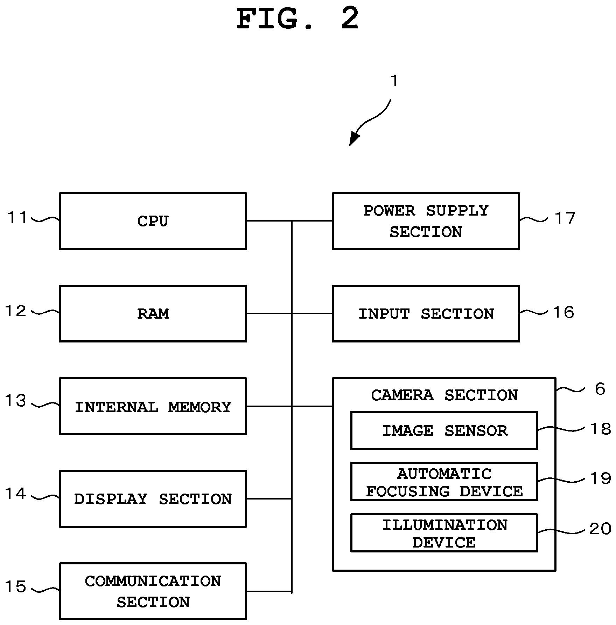

FIG. 2 is a block diagram outlining an electrical configuration of the handy terminal 1. The handy terminal 1 is constituted mainly by a CPU (Central Processing Unit) 11 (a decoding section, a judgment section, a storage control section, and an imaging control section), and other sections connected to the CPU 11, such as a RAM (Random Access Memory) 12, an internal memory 13 (memory section), a display section 14 (display section), a communication section 15, the camera section 6 (imaging section), an input section 16 (input section), and a power supply section 17.

The internal memory 13 is constituted by a rewritable non-volatile memory such as a flash memory provided in the handy terminal 1. This internal memory 13 has stored therein a control program for controlling the CPU 11 to perform the later-described processing and various types of setting information regarding an operation mode of the handy terminal 1 set by the user and the like. As the scanning modes of the handy terminal 1, two types of modes, that is, a barcode mode and a sales-slip imaging mode are provided, and information regarding the type of a scanning mode set by the user is also stored in this internal memory 13 as setting information.

In the barcode mode, a barcode included in a sales slip that is a processing target is read, and only identification information in the barcode is stored in the internal memory 13. Also, in the sales-slip imaging mode, identification information in a barcode read from a sales slip that is a processing target and an image acquired by the sales slip being photographed are stored in association with each other in the internal memory 13. In the above-described internal memory 13, a storage area for storing this identification information in the barcode and the image showing the sales slip is provided.

Note that the handy terminal 1 is usable on plural types of sales slips, and information regarding these plural types of sales slips is also stored in advance in the internal memory 13. This information regarding the sales slips includes the shapes (aspect ratios) of the sales slips, the positions of barcodes on the sales slips, and the types of the barcodes (JAN (Japanese Article Number) and the like).

The display section 14 is constituted by the display 3 shown in FIG. 1 and its drive circuit. This display 3 is, for example, an LCD (Liquid Crystal Display) or an ELD (Electro Luminescent Display). The input section 16, which includes the trigger keys 4 and the plurality of operation keys 5 shown in FIG. 1, detects operations (key pressing operations) on these keys, and supplies the operation information thereof to the CPU 11. The power supply section 17 is constituted by a battery charger, a DC-DC converter, and the like, and supplies each section of the handy terminal 1 with electric power required for them to be operated. The communication section 15 communicates with an external information device as needed by a predetermined wired or wireless communication method, and transmits barcode identification information stored in the internal memory 13 or sales slip information where barcode identification information and a captured image have been associated with each other to this external information device. Note that the external information device herein is, for example, a computer or a data management server which performs management operations related to the collection and delivery of goods.

The camera section 6 is constituted by an image sensor 18 (image sensor) which captures an image of a photographic subject via an optical system including a focus lens, an automatic focusing device 19 (automatic focusing device) which adjusts a focal position by moving the focus lens on the optical axis, and an illumination device 20 (illumination device) which emits fill light to a photographic subject. The image sensor 18 is, for example, a CMOS (Complementary Metal Oxide Semiconductor) sensor, and its number of effective pixels is 1920 x 1080 (horizontal x vertical) pixels. The focal adjustment method of the automatic focusing device 19 is, for example, a contrast detection method. Although not shown in the drawing, the camera section 6 includes a drive circuit which drives the image sensor 18, an image processing circuit which performs processing including various types of signal processing such as white balance and brightness adjustment on an imaging signal read out from the image sensor 18, and supplies it to the CPU 11 as image data.

The CPU 11 controls the operations of the handy terminal 1 based on predetermined control programs stored in the internal memory 13. In particular, the CPU 11 performs, based on an image of a sales slip 101 captured by the camera section 6, processing of decoding identification information in a barcode 102 included in the sales slip 101 and processing of storing the decoded identification information or both the decoded identification information and the captured image of the sales slip in the internal memory 13. In these processing, the RAM 12 is used as a working memory, and temporarily stores various types of data including the image data.

Next, operations of the handy terminal 1 configured as described above according to the present invention are described. Here, a case is described in which a processing target, that is, a barcode reading target is a sales slip 101 such as that shown in FIG. 1. In this handy terminal 1, barcode reading is performed when the user presses the trigger key 4.

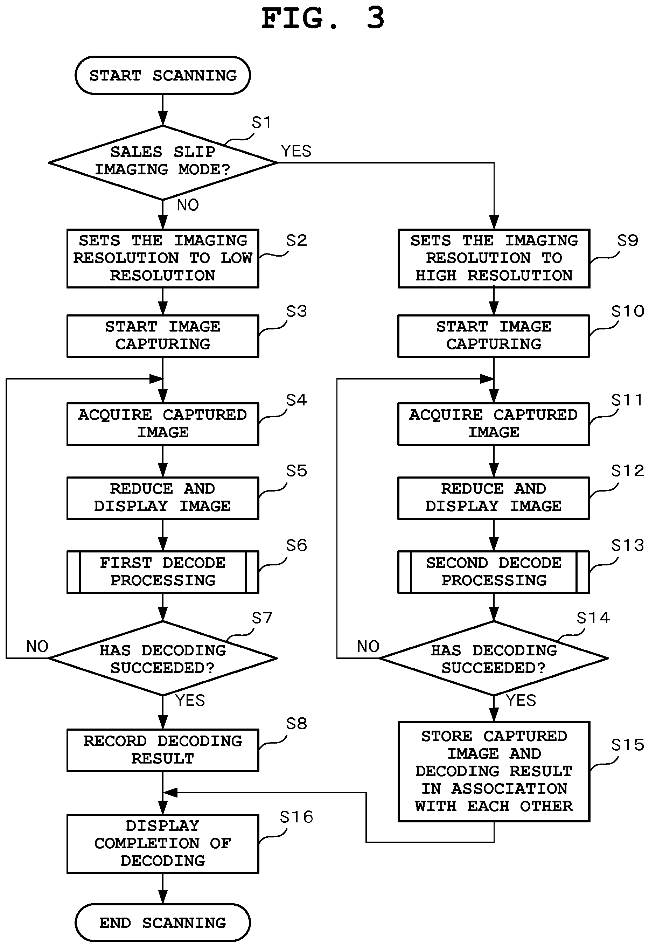

FIG. 3 to FIG. 5 are flowcharts showing details of barcode reading processing that is performed by the CPU 11 in accordance with a predetermined control program in the internal memory 13 when the trigger key 4 is pressed. In this reading processing, barcode reading is performed under a predetermined reading condition. Here, two types of reading conditions are used, which are a first reading condition that is used when the barcode mode is a current scanning mode and a second reading condition that is used when the sales-slip imaging mode is a current scanning mode.

The first reading condition is a reading condition for the handy terminal 1 to have a reading capability commonly needed for barcode reading. Also, the second reading condition is a reading condition stricter than the first reading condition, and the contents of which are used as judgment criteria for judging whether a captured image that serves as a barcode reading target has image quality suitable for being a recording target.

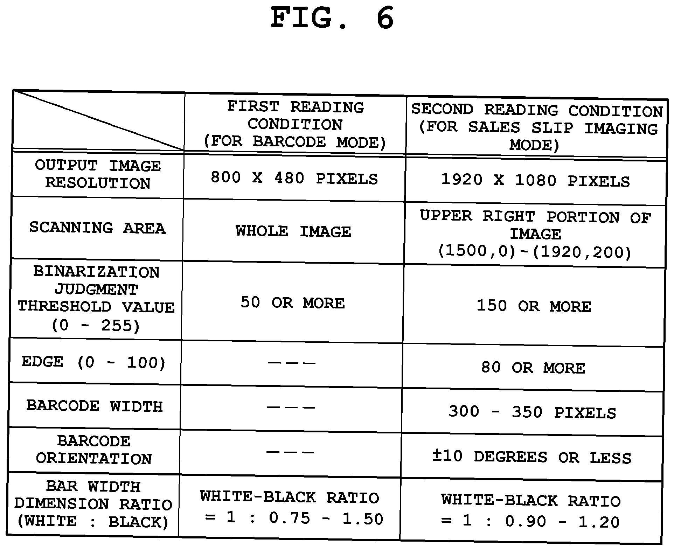

More specifically, each of the first reading condition and the second reading condition includes a plurality of condition items from "OUTPUT IMAGE RESOLUTION" to "BAR WIDTH DIMENSION RATIO", and the contents of the condition items are different between them, as shown in FIG. 6. Note that the first reading condition does not include the three condition items "EDGE", "BARCODE WIDTH", and "BARCODE ORIENTATION" among the plurality of condition items. Among the plurality of condition items, "BINARIZATION JUDGMENT THRESHOLD VALUE (0 - 255)", "EDGE (0 - 100)", "BARCODE WIDTH", and "BARCODE ORIENTATION" are decoding execution condition items for determining whether or not to perform barcode decoding. Also, among the plurality of condition items, "BAR WIDTH DIMENSION RATIO" is a decoding accuracy condition item related to accuracy when a captured image is analyzed at the time of barcode decoding.

As described above, among the plurality of decoding execution condition items, the three condition items "EDGE", "BARCODE WIDTH", and "BARCODE ORIENTATION" are not included in the first reading condition and are included only in the second reading condition. That is, in a comparison between the decoding execution condition items of the first reading condition and those of the second reading condition, the decoding execution condition items of the second reading condition are stricter than those of the first reading condition.

Also, among the plurality of condition items, "BINARIZATION JUDGMENT THRESHOLD VALUE (0 - 255)" is a threshold value that is used in the binarization of a captured image which serves as a processing target prior to barcode reading as described below. Moreover, "BAR WIDTH DIMENSION RATIO" is a ratio between the width dimension of a white bar (space) having a minimum width and the width dimension of a black bar having a minimum width in a barcode in a binarized image. This ratio is 1:1 when a target barcode on a sales slip or the like is a standard barcode and a captured image showing it is not an out-of-focus image or a blurred image.

Note that the setting contents of the condition items "BINARIZATION JUDGMENT THRESHOLD VALUE (0 - 255)" and "BAR WIDTH DIMENSION RATIO" are determined in relation to each other and, in this case as well, the condition items of the second reading condition are stricter that those of the first reading condition.

Next, processing details of the CPU 11 are specifically described with reference to FIG. 3 to FIG. 5. First, when the trigger key 4 is depressed, the CPU 11 judges whether the sales slip imaging mode has been set by the user as the current scanning mode (Step S1). When the current scanning mode is not the sales slip imaging mode, that is, when the normal scanning mode has been set as the current scanning mode (NO at Step S1), the CPU 11 performs the following processing under the first reading condition.

First, the CPU 11 sets the imaging resolution (number of pixels) of the camera section 6 to a low resolution (Step S2), and then starts the imaging operation of the camera section 6 (Step S3). Note that, here, the imaging resolution is set to 800 x 480 pixels shown as "OUTPUT IMAGE RESOLUTION" in FIG. 6. This resolution (low resolution) is a resolution that is enough to read a barcode in a captured image. Also, the reason for setting the output image resolution to the low resolution rather than the maximum resolution (1920 x 1080 pixels) is to reduce the amount of time required for first decode processing described later, that is, the amount of time required for barcode reading.

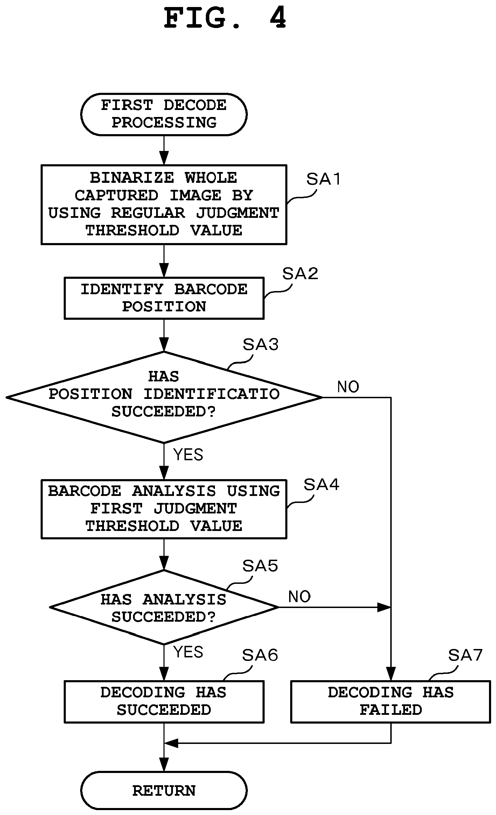

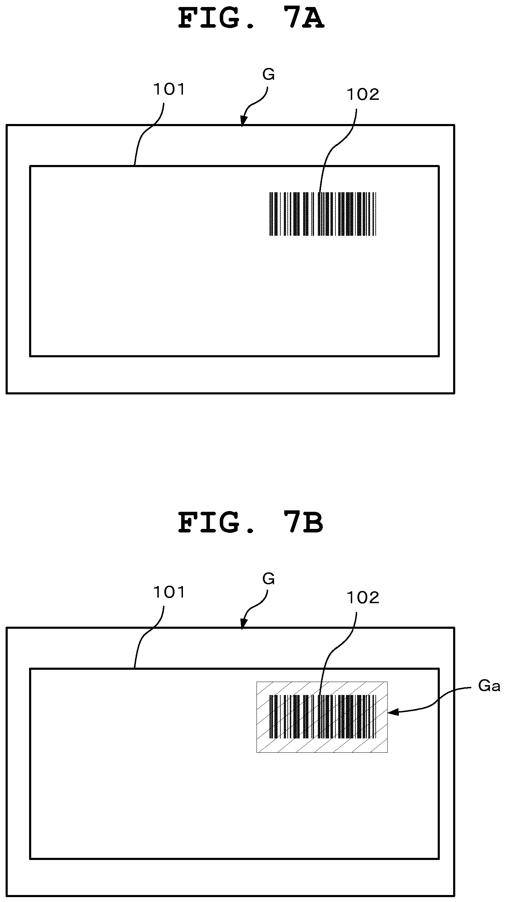

Then, the CPU 11 acquires an image captured at a predetermined frame rate from the camera section 6 (Step S4), and reduces and displays it on the display section 14 (Step S5). That is, preview display for the captured image is performed. FIG. 7A is a diagram showing an example of this captured image G (captured image). Then, the CPU 11 performs the first decode processing shown in FIG. 4 with the captured image G acquired from the camera section 6 as a target (Step S6) .

In the first decode processing, the CPU 11 binarizes the whole captured image G acquired at Step S4 by using a regular judgment threshold value (luminosity) specified as the first reading condition (Step SA1). Note that the regular judgment threshold value used herein is "50 OR MORE" shown as "BINARIZATION JUDGMENT THRESHOLD VALUE" in FIG. 6.

Next, the CPU 11 identifies a barcode position in the binarized image (Step SA2). More specifically, the CPU 11 judges whether the data of the binarized image includes a row of pixel data that matches with a barcode pattern, and thereby identifies a position where a barcode is shown. This position is defined by the horizontal position of the row of pixel data in the image and the vertical positions of both ends of the row of pixel data. When this barcode position identification cannot be achieved (NO at Step SA3), the CPU 11 determines that the barcode decoding has failed at that point (Step SA7), and returns to the processing shown in FIG. 3.

Conversely, when the position of a barcode is successfully identified (YES at Step SA3), the CPU 11 performs barcode analysis using a first judgment threshold value (Step SA4). This processing is practically decode processing where the row of white bars (spaces) and black bars which are components of the barcode is decoded and converted into a character code. The first judgment threshold value herein is a ratio between a white bar width dimension and a black bar width dimension specified as the first reading condition ("BAR WIDTH DIMENSION RATIO" in FIG. 6) and is "WHITE-BLACK RATIO = 1 : 0.75 - 1.50". Here, if the barcode analysis fails, that is, if a character code whose contents correspond to the type of the barcode is not acquired even when the row of white bars (space) and black bars is decoded using the first judgment threshold value (NO at Step SA5), the CPU 11 determines that the decoding has failed (Step SA7), and returns to the processing shown in FIG. 3. Conversely, when the barcode analysis succeeds (YES at Step SA5), the CPU 11 determines that the barcode decoding has succeeded (Step SA6), and returns to the processing shown in FIG. 3.

Then, when the barcode decoding has not succeeded in the first decode processing (NO at Step S7), the CPU 11 returns to and performs the processing at Step S4 and the following steps, as shown in FIG. 3. That is, the CPU 11 updates a reduced image displayed on the display section 14 by preview display every time a new captured image is acquired, and repeats the first decode processing.

Then, when barcode decoding succeeds in the first decode processing (YES at Step S7), the CPU 11 stores, in a predetermined area in the internal memory 13, a decoding result acquired by the first decode processing, that is, identification information in the barcode (Step S8). Then, the CPU 11 displays a message or the like indicating that the decoding has been completed on the display section 14 (Step S16), and ends the reading processing.

On the other hand, at the beginning of the processing, when the sales slip imaging mode has been set as the current scanning mode (YES at Step S1), the CPU 11 performs the following processing under the second reading condition.

First, the CPU 11 sets the imaging resolution (number of pixels) of the camera section 6 to a high resolution (Step S9), and then starts the imaging operation of the camera section 6 (Step S10). Note that, here, the imaging resolution is set to 1920 x 1080 pixels shown as "OUTPUT IMAGE RESOLUTION" in FIG. 6, which is the maximum resolution that can be set for the camera section 6.

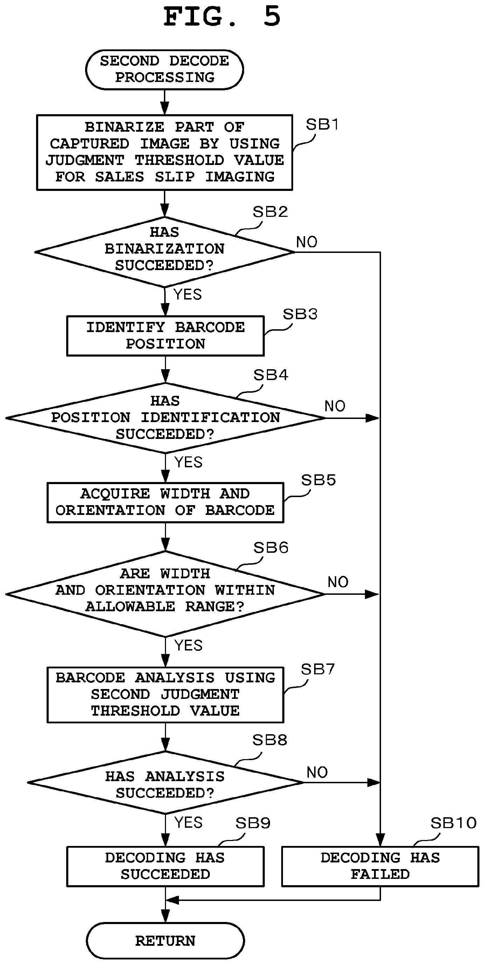

Then, the CPU 11 acquires an image captured at a predetermined frame rate from the camera section 6 (Step S11), and reduces and displays it on the display section 14 (Step S12). That is, preview display for the captured image is performed. Subsequently, the CPU 11 performs second decode processing shown in FIG. 5 with the captured image G acquired from the camera section 6 as a target (Step S13).

In the second decode processing, the CPU 11 binarizes a part of the captured image G acquired at Step S11 by using a judgment threshold value (luminosity) for sales slip imaging which has been specified as the second reading condition (Step SB1). That is, the CPU 11 performs binarization with an upper right portion of the image from (1500, 0) to (1920, 200) shown as "SCANNING AREA" in FIG. 6 as a target. Here, the reason for binarizing only a part of the captured image unlike the first decode processing is that, in the image capturing in the sales slip imaging mode, the user arranges a sales slip 101 in the viewing angle such that the sales slip 101 fills the viewing angle. That is, the imaging position of a barcode thereon is substantially known and therefore scanning is not required to be performed on the entire image. In addition, since the image G captured in this sales slip imaging mode is a high-resolution image, the time length of the following processing is increased unless the processing target area is narrowed. Accordingly, only a part of the captured image is binarized. Note that setting values for this "SCANNING AREA" should preferably be stored in advance in the internal memory 13 in association with types of sales slips which serve as photographic subjects. In that case, a configuration should be adopted in which, when the sales slip imaging mode is set and the user selects the type of a sales slip that serves as a photographic subject via the input section 16, a setting value stored in the internal memory 13 in association with the selected sales slip type is read out.

FIG. 7B is a diagram showing a binarization processing target area Ga when an image shown in FIG. 7A is the above-described captured image G. This processing target area Ga is a predetermined area in accordance with the sales slip type, and is a rectangular area including the barcode 102 and its surrounding area as shown in the drawing. Also, the judgment threshold value for sales slip imaging herein is "150 OR MORE" shown as "BINARIZATION JUDGMENT THRESHOLD VALUE" in FIG. 6.

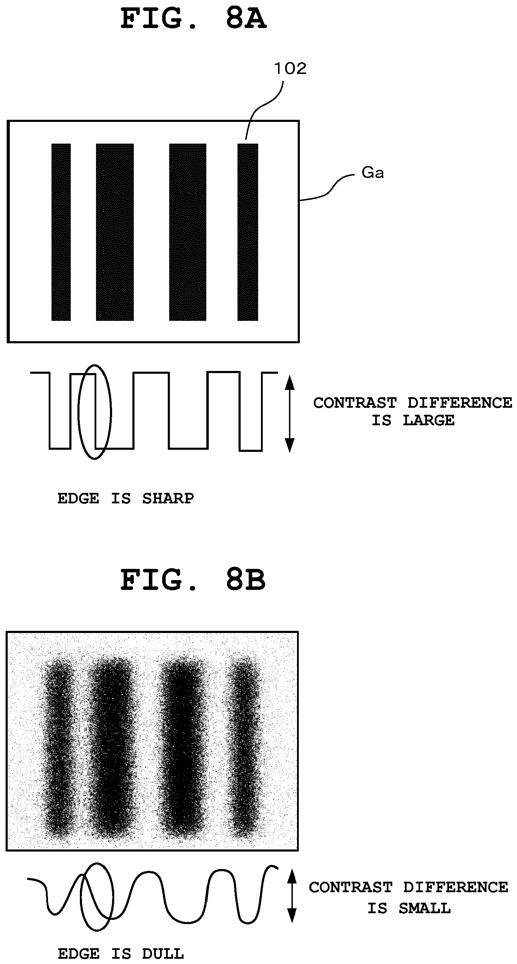

Next, the CPU 11 judges whether the binarization has succeeded (Step SB2). In this processing, edge sharpness in the processing target area Ga is evaluated using values 0 to 100, based on the luminosity information of each pixel acquired in the binarization of the processing target area Ga. This edge sharpness is high when the barcode 102 is in the processing target area Ga, the quality of the captured image G is high, a contrast difference in the processing target area Ga is large, and edges therein are clear, as shown in FIG. 8A. Also, this edge sharpness is low when the quality of the captured image G is low due to untimely focal adjustment or camera shake at the time of the image capturing of the sales slip 101, the contrast difference in the processing target area Ga is small, and the edges therein are not very clear even if the barcode 102 is in the processing target area Ga, as shown in FIG. 8B. Note that FIG. 8A and FIG. 8B are drawings provided for the convenience of description of the edge sharpness, and the lateral direction in the drawing corresponds to the horizontal line direction of the captured image G.

Accordingly, in the processing at Step SB2, the CPU 11 judges that the binarization has succeeded when the edge sharpness satisfies a predetermined judgment criterion, or judges that the binarization has failed when the edge sharpness does not satisfy the judgment criterion. Note that the judgment criterion used herein is a value ("EDGE" in FIG .6) specified as the second reading condition, which is "80 OR MORE". At Step SB2, when the edge sharpness does not satisfy the judgment criterion and a judgment is made that the binarization has failed (NO at Step SB2), the CPU 11 determines that the decoding of the barcode 102 has failed at that point (Step SB10), and returns to the processing shown in FIG. 3.

Conversely, when the edge sharpness satisfies the judgment criterion and a judgment is made that the binarization has succeeded (YES at Step SB2), the CPU 11 identifies the position of the barcode 102 in the processing target area Ga (Step SB3). This processing is the same as that of Step SA2 under the first reading condition in the normal scanning mode. When the position of the barcode 102 cannot be identified (NO at Step SB4), the CPU 11 determines that the decoding of the barcode 102 has failed at that point (Step SB10), and returns to the processing shown in FIG. 3.

Conversely, when the position of the barcode 102 is successfully identified (YES at Step SB4), the CPU 11 acquires the width and orientation of the barcode 102 in the processing target area Ga (Step SB5), and judges whether they are within allowable ranges (Step SB6). These allowable ranges are ranges ("BARCODE WIDTH" and "BARCODE ORIENTATION" in FIG. 6) specified as the second reading condition. "BARCODE WIDTH" is the number of pixels and the allowable range thereof is "300 - 350 PIXELS". "BARCODE ORIENTATION" is an inclination angle with respect to a horizontal line and the allowable range thereof is "±10 DEGREES OR LESS".

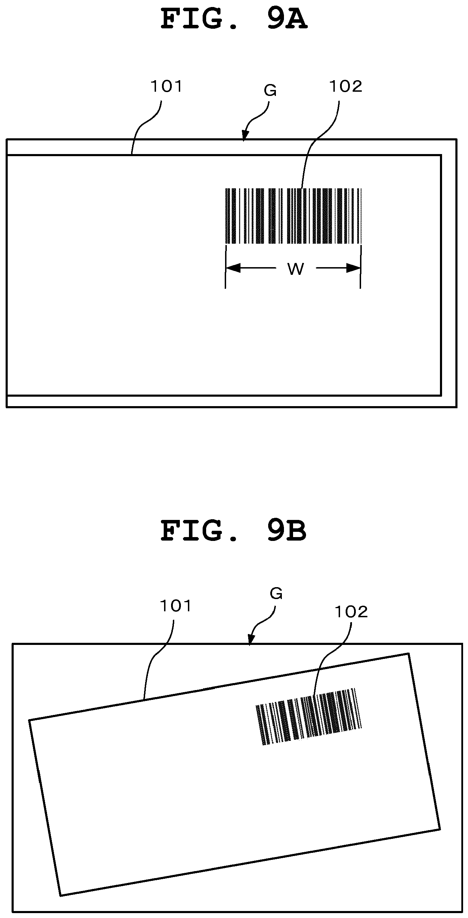

When the barcode width W is not within the allowable range
as shown in FIG. 9A, or when the barcode orientation (inclination angle) is not within the allowable range as shown in FIG. 9B, the CPU 11 determines that the decoding of the barcode 102 has failed at that point (Step SB10), and returns to the processing shown in FIG. 3.

Conversely, when the width and orientation of the barcode 102 in the processing target area Ga are within the allowable ranges (YES at Step SB6), the CPU 11 performs barcode analysis (substantive barcode decoding) by using a second judgment threshold value (Step SB7). The second judgment threshold value used herein is a ratio between a white bar width dimension and a black bar width dimension specified as the second reading condition ("BAR WIDTH DIMENSION RATIO" in FIG. 6) and is "WHITE-BLACK RATIO = 1 : 0.90 - 1.20" which is stricter than the first judgment threshold value. Here, if the barcode analysis fails, that is, if a character code whose contents correspond to the type of the barcode is not acquired even when the row of white bars (space) and black bars is decoded using the second judgment threshold value (NO at Step SB8), the CPU 11 determines that the decoding has failed (Step SA7), and returns to the processing shown in FIG. 3.

Conversely, when the barcode analysis succeeds (YES at Step SB8), the CPU 11 determines that the decoding has succeeded (Step SB9), and returns to the processing shown in FIG. 3.

In the second decode processing, when the barcode decoding has not succeeded (NO at Step S14), the CPU 11 returns to and performs the processing at Step S11 and the following steps, as shown in FIG. 3. That is, the CPU 11 updates a reduced image displayed on the display section 14 by preview display every time a new captured image is acquired, and repeats the second decode processing.

Then, when barcode decoding succeeds in the second decode processing (YES at Step S13), the CPU 11 judges that a captured image that is a barcode reading target at that point has image quality suitable for being a recording target, and stores this captured image and a decoding result acquired by the second decode processing, that is, identification information in the barcode in association with each other, in a predetermined area in the internal memory 13 (Step S15). Then, the CPU 11 displays a message or the like indicating that the decoding has been completed on the display section 14 (Step S16), and ends the reading processing.

As described above, in this handy terminal 1, in barcode reading in the sales slip imaging mode, only a captured image used in successful decoding of a barcode, that is, only a captured image judged to have image quality suitable for being a recording target is stored in association with identification information in the barcode. As a result of this configuration, a captured image to be stored in association with identification information always has favorable image quality suitable for recording. That is, an image can be unfailingly recorded which is not an out-of-focus or blurred image and in which a sales slip 101 is not significantly tilted and is shown in its entirety.

Also, in the sales slip imaging mode, the imaging resolution (the number of pixels) of the camera section 6 is automatically set to a resolution higher than that in the barcode mode, so that a high-quality captured image is unfailingly recorded.

Moreover, in barcode reading in the sales slip imaging mode, the second reading condition is used which is stricter than the first reading condition that is used in the barcode mode. This second reading condition is also used as a judgment criterion for judging whether a captured image that servers as a barcode reading target has image quality suitable for being a recording target. Accordingly, in barcode reading, whether the quality of a captured image is high, that is, whether it is suitable for recoding is not required to be separately judged. As a result of this configuration, as compared to a configuration where the judgment of captured image quality is separately performed, the processing load of the CPU 11 in barcode reading can be reduced, so that barcode reading processing can be quickly performed without the CPU 11 having high data processing power.

Also, in the present embodiment, the second reading condition includes the decoding execution condition items for determining whether or not to perform barcode decoding, that is, "CONTRAST (CONTRASTING DENSITY)", "EDGE (0 - 100)", "BARCODE WIDTH", and "BARCODE ORIENTATION". Therefore, if any of the decoding execution condition items is not satisfied when the second decode processing is repeatedly performed before barcode decoding succeeds, barcode decoding processing, that is, the barcode analysis processing at Step SB7 which is substantive barcode decoding processing is not wastefully performed. Accordingly, in the sales slip imaging mode as well, the same barcode reading speed as that in the barcode mode can be achieved. This is highly effective in configurations where the imaging resolution (the number of pixels) of a camera section in a sales slip imaging mode is set higher than that in a barcode mode as in the present embodiment.

Also, the present invention is not limited to handy terminals and can be applied to other portable terminal apparatuses such as smartphones, tablet PCs (Personal Computer), laptop PCs, and PDAs (Personal Digital Assistant) as long as they have functions to capture an image of a sales slip or the like and acquire the image information thereof.

## Claims

1. A portable terminal apparatus (1) having an imaging section (6) which captures (S10) an image (G) of a photographic subject (101) including a barcode (102) and a decoding section (11) which decodes (S13) the barcode (102) based on the captured image (G) of the photographic subject (101) captured by the imaging section (6) so as to acquire identification information,
a judgment section (11) which judges (S14) whether the captured image (G) is suitable as a recording target based on the captured image (G), and
a storage control section (11) which controls (S15) a storage section (13) to store the captured image (G) judged to be suitable as a recording target by the judgment section (11) and the identification information acquired by the decoding section (11) in association with each other, **characterized in that**:
the decoding section (11) decodes the barcode (102) under a first reading condition so as to acquire the identification information when a first mode in which the storage section (13) is to be controlled to store the identification information without being associated with the captured image (G) has been set as an operation mode, or decodes the barcode (102) under a second reading condition where the captured image is to be acquired at an image resolution higher than a resolution under the first reading condition so as to acquire the identification information when a second mode in which the storage section (13) is to be controlled to store the identification information and the captured image (G) in association with each other has been set as an operation mode.

2. The portable terminal apparatus (1) according to claim 1, **characterized in that** the second reading condition includes a decoding execution condition for determining whether or not to perform decoding of the barcode (102) by the decoding section (11).

3. The portable terminal apparatus (1) according to claim 2, **characterized in that** the decoding execution condition includes a decoding accuracy condition on at least one of a position of the barcode (102) in the captured image (G), a contrast ratio in the captured image (G), edge sharpness in the barcode (102), a width of the barcode (102), and an inclination angle of the barcode (102).

4. The portable terminal apparatus (1) according to any one of claims 1 to 3, **characterized in that** the second reading condition includes a decoding accuracy condition on analysis accuracy when the captured image (G) is analyzed in decoding of the barcode (102) by the decoding section (11).

5. The portable terminal apparatus (1) according to any one of claims 1 to 4, further **characterized by**:
an imaging control section which, when the second mode has been set as an operation mode, controls the imaging section (6) to capture an image of the photographic subject (101) at a resolution higher than a resolution that is set when the first mode has been set as an operation mode.

6. The portable terminal apparatus (1) according to any one of claims 1 to 5, **characterized in that** the judging section (11) judges that the captured image (G) is suitable as a recording target (S14) when a sales slip having the barcode is recognized as the photographic subject based on the captured image (G).

7. The portable terminal apparatus (1) according claim 1, **characterized in that** the decoding section (11) performs decoding (S14) on a predetermined limited area in the captured image (G), based on a type of a sales slip (101) serving as the photographic subject (101) which has been selected by a user via an input section (6).

8. The portable terminal apparatus (1) according to any one of claims 1 to 7, **characterized in that** the photographic subject (101) is a sales slip (101) including the barcode (102) .

9. The portable terminal apparatus (1) according to any one of claims 1 to 8, further **characterized by**:
a display section (14) which displays (S12) the captured image (G) acquired from the imaging section (6).

10. The portable terminal apparatus (1) according to claim 9, **characterized in that** the display section (14) displays (S16) completion of acquisition of the identification information by the decoding section (11).

11. The portable terminal apparatus (1) according to any one of claims 1 to 10, **characterized in that** the imaging section (6) includes an image sensor (18), an automatic focusing device (19), and an illumination device (20).

12. An information recording method including a step of capturing (S10) an image (G) of a photographic subject (101) and a step of decoding (S13) a barcode (102) included in the photographic subject (101) based on the captured image (G) of the photographic subject (101) so as to acquire identification information,
a step of judging (S14) whether the captured image (G) is suitable as a recording target based on the captured image (G), and
a step of controlling (S15) a storage section (13) to store the captured image (G) judged to be suitable as a recording target and the acquired identification information in association with each other,
**characterized in that**:
in the step of acquiring the identification information, the barcode (102) is decoded under a first reading condition so as to acquire the identification information when a first mode in which the storage section (13) is to be controlled to store the identification information without being associated with the captured image (G) has been set as an operation mode, or the barcode (102) is decoded under a second reading condition where the captured image is to be acquired at an image resolution higher than a resolution under the first reading condition so as to acquire the identification information when a second mode in which the storage section (13) is to be controlled to store the identification information and the captured image (G) in association with each other has been set as an operation mode.

13. A non-transitory computer-readable storage medium having a program stored thereon that is executable by a processor in a portable terminal apparatus (1) having an imaging section (6) to actualize functions including processing for controlling (S10) the imaging section (6) to capture an image (G) of a photographic subject (101), processing for decoding (S13) a barcode (102) included in the photographic subject (101) based on the captured image (G) of the photographic subject (101) so as to acquire identification information,
processing for judging (S14) whether the captured image (G) is suitable as a recording target based on the captured image (G), and
processing for controlling (S15) a storage section (13) to store the captured image (G) judged to be suitable as a recording target and the acquired identification information in association with each other,
**characterized in that**:
in the processing for acquiring the identification information, the barcode (102) is decoded under a first reading condition so as to acquire the identification information when a first mode in which the storage section (13) is to be controlled to store the identification information without being associated with the captured image (G) has been set as an operation mode, or the barcode (102) is decoded under a second reading condition where the captured image is to be acquired at an image resolution higher than a resolution under the first reading condition so as to acquire the identification information when a second mode in which the storage section (13) is to be controlled to store the identification information and the captured image (G) in association with each other has been set as an operation mode.

## Patentansprüche

1. Tragbare Endgerätevorrichtung (1) mit einem Bildgebungsabschnitt (6), der ein Bild (G) eines fotografischen Motivs (101), das einen Strichcode (102) aufweist, aufnimmt (S10), und einem Dekodierabschnitt (11), der den Strichcode (102) auf der Grundlage des von dem Bildgebungsabschnitt (6) aufgenommenen Bildes (G) des fotografischen Motivs (101) dekodiert (S13), um Identifizierungsinformationen zu erlangen,
einen Beurteilungsabschnitt (11), der auf der Grundlage des aufgenommenen Bildes (G) beurteilt (S14), ob das aufgenommene Bild (G) als ein Aufzeichnungsziel geeignet ist, und
einen Speichersteuerabschnitt (11), der einen Speicherabschnitt (13) steuert (S15), um das aufgenommene Bild (G), das durch den Beurteilungsabschnitt (11) als geeignet als Aufzeichnungsziel beurteilt wurde, und die durch den Dekodierabschnitt (11) erlangten Identifizierungs-informationen in Verbindung miteinander zu speichern,
**dadurch gekennzeichnet, dass**:
der Dekodierabschnitt (11) den Strichcode (102) unter einer ersten Lesebedingung dekodiert, um die Identifizierungsinformationen zu erlangen, wenn ein erster Modus, in dem der Speicherabschnitt (13) so zu steuern ist, dass er die Identifizierungsinformationen speichert, ohne mit dem aufgenommenen Bild (G) verbunden zu sein, als ein Betriebsmodus eingestellt wurde, oder den Strichcode (102) unter einer zweiten Lesebedingung dekodiert, bei der das aufgenommene Bild mit einer höheren Bildauflösung als einer Auflösung unter der ersten Lesebedingung zu erlangen ist, um die Identifizierungsinformationen zu erlangen, wenn ein zweiter Modus, bei dem der Speicherabschnitt (13) so zu steuern ist, dass er die Identifizierungsinformationen und das aufgenommene Bild (G) in Verbindung miteinander speichert, als Betriebsmodus eingestellt wurde.

2. Tragbare Endgerätevorrichtung (1) nach Anspruch 1, **dadurch gekennzeichnet, dass** die zweite Lesebedingung eine Dekodierausführungsbedingung aufweist, um zu bestimmen, ob die Dekodierung des Strichcodes (102) durch den Dekodierabschnitt (11) durchzuführen ist oder nicht.

3. Tragbare Endgerätevorrichtung (1) nach Anspruch 2, **dadurch gekennzeichnet, dass** die Dekodierausführungsbedingung eine Dekodiergenauigkeitsbedingung für mindestens eines von einer Position des Strichcodes (102) in dem aufgenommenen Bild (G), einem Kontrastverhältnis in dem aufgenommenen Bild (G), einer Kantenschärfe in dem Strichcode (102), einer Breite des Strichcodes (102) und einem Neigungswinkel des Strichcodes (102) aufweist.

4. Tragbare Endgerätevorrichtung (1) nach einem der Ansprüche 1 bis 3, **dadurch gekennzeichnet, dass** die zweite Lesebedingung eine Dekodiergenauigkeitsbedingung bezüglich der Analysegenauigkeit aufweist, wenn das aufgenommene Bild (G) bei der Dekodierung des Strichcodes (102) durch den Dekodierabschnitt (11) analysiert wird.

5. Tragbare Endgerätevorrichtung (1) nach einem der Ansprüche 1 bis 4, weiter **gekennzeichnet durch**:
einen Bildgebungssteuerabschnitt, der, wenn der zweite Modus als ein Betriebsmodus eingestellt wurde, den Bildgebungsabschnitt (6) so steuert, dass er ein Bild des fotografischen Motivs (101) mit einer höheren Auflösung als einer Auflösung aufnimmt, die eingestellt ist, wenn der erste Modus als ein Betriebsmodus eingestellt wurde.

6. Tragbare Endgerätevorrichtung (1) nach einem der Ansprüche 1 bis 5, **dadurch gekennzeichnet, dass** der Beurteilungsabschnitt (11) beurteilt, dass das aufgenommene Bild (G) als ein Aufzeichnungsziel (S14) geeignet ist, wenn ein Kassenbeleg mit dem Strichcode als das fotografische Motiv auf der Grundlage des aufgenommenen Bildes (G) erkannt wird.

7. Tragbare Endgerätevorrichtung (1) nach Anspruch 1, **dadurch gekennzeichnet, dass** der Dekodierabschnitt (11) eine Dekodierung (S14) an einem vorbestimmten begrenzten Bereich in dem aufgenommenen Bild (G) auf der Grundlage eines Typs eines als fotografisches Motiv (101) dienenden Kassenbelegs (101) durchführt, der von einem Benutzer über einen Eingabeabschnitt (6) ausgewählt wurde.

8. Tragbare Endgerätevorrichtung (1) nach einem der Ansprüche 1 bis 7, **dadurch gekennzeichnet, dass** das fotografische Motiv (101) ein Kassenbeleg (101) ist, der den Strichcode (102) aufweist.

9. Tragbare Endgerätevorrichtung (1) nach einem der Ansprüche 1 bis 8, weiter **gekennzeichnet durch**:
einen Anzeigeabschnitt (14), der das von dem Bildgebungsabschnitt (6) erlangte aufgenommene Bild (G) anzeigt (S12).

10. Tragbare Endgerätevorrichtung (1) nach Anspruch 9, **dadurch gekennzeichnet, dass** der Anzeigeabschnitt (14) den Abschluss der Erlangung der Identifizierungsinformationen durch den Dekodierabschnitt (11) anzeigt (S16).

11. Tragbare Endgerätevorrichtung (1) nach einem der Ansprüche 1 bis 10, **dadurch gekennzeichnet, dass** der Bildgebungsabschnitt (6) einen Bildsensor (18), eine automatische Fokussiereinrichtung (19) und eine Beleuchtungseinrichtung (20) aufweist.

12. Informationsaufzeichnungsverfahren, das einen Schritt des Aufnehmens (S10) eines Bildes (G) eines fotografischen Motivs (101) und einen Schritt des Dekodierens (S13) eines in dem fotografischen Motiv (101) enthaltenen Strichcodes (102) auf der Grundlage des aufgenommenen Bildes (G) des fotografischen Motivs (101), um Identifizierungsinformationen zu erlangen,
einen Schritt des Beurteilens (S14), ob das aufgenommene Bild (G) als ein Aufzeichnungsziel geeignet ist, basierend auf dem aufgenommenen Bild (G), und
einen Schritt des Steuerns (S15) eines Speicherabschnitts (13) aufweist, um das aufgenommene Bild (G), das als ein Aufzeichnungsziel geeignet beurteilt wurde, und die erlangten Identifizierungsinformationen in Verbindung miteinander zu speichern, **dadurch gekennzeichnet, dass**:
in dem Schritt des Erlangens der Identifizierungsinformationen der Strichcode (102) unter einer ersten Lesebedingung dekodiert wird, um die Identifizierungsinformationen zu erlangen, wenn ein erster Modus, in dem der Speicherabschnitt (13) so zu steuern ist, dass er die Identifizierungsinformationen speichert, ohne mit dem aufgenommenen Bild (G) verbunden zu sein, als ein Betriebsmodus eingestellt wurde, oder der Strichcode (102) unter einer zweiten Lesebedingung dekodiert wird, bei der das aufgenommene Bild mit einer höheren Bildauflösung als einer Auflösung unter der ersten Lesebedingung zu erlangen ist, um die Identifizierungsinformationen zu erlangen, wenn ein zweiter Modus, bei dem der Speicherabschnitt (13) so zu steuern ist, dass er die Identifizierungsinformationen und das aufgenommene Bild (G) in Verbindung miteinander speichert, als ein Betriebsmodus eingestellt wurde.

13. Nicht-transitorisches, computerlesbares Speichermedium mit einem darauf gespeicherten Programm, das durch einen Prozessor in einer tragbaren Endgerätevorrichtung (1) mit einem Bildgebungsabschnitt (6) ausführbar ist, um Funktionen zu verwirklichen, einschließlich der Verarbeitung zum Steuern (S 10) des Bildgebungsabschnitts (6), um ein Bild (G) eines fotografischen Motivs (101) aufzunehmen, der Verarbeitung zum Dekodieren (S 13) eines Strichcodes (102), der in dem fotografischen Motiv (101) enthalten ist, auf der Grundlage des aufgenommenen Bildes (G) des fotografischen Motivs (101), um Identifizierungsinformationen zu erlangen,
Verarbeitung zum Beurteilen (S14), ob das aufgenommene Bild (G) als ein Aufzeichnungsziel geeignet ist, auf der Grundlage des aufgenommenen Bildes (G), und
Verarbeitung zum Steuern (S15) eines Speicherabschnitts (13), um das aufgenommene Bild (G), das als Aufzeichnungsziel geeignet beurteilt wurde, und die erlangten Identifizierungsinformationen in Verbindung miteinander zu speichern, **dadurch gekennzeichnet, dass**:
bei der Verarbeitung zum Erlangen der Identifizierungsinformationen der Strichcode (102) unter einer ersten Lesebedingung dekodiert wird, um die Identifizierungsinformationen zu erlangen, wenn ein erster Modus, in dem der Speicherabschnitt (13) so zu steuern ist, dass er die Identifizierungsinformationen speichert, ohne mit dem aufgenommenen Bild (G) verbunden zu sein, als ein Betriebsmodus eingestellt wurde, oder der Strichcode (102) unter einer zweiten Lesebedingung dekodiert wird, bei der das aufgenommene Bild mit einer höheren Bildauflösung als einer Auflösung unter der ersten Lesebedingung zu erlangen ist, um die Identifizierungsinformationen zu erlangen, wenn ein zweiter Modus, bei dem der Speicherabschnitt (13) so zu steuern ist, dass er die Identifizierungsinformationen und das aufgenommene Bild (G) in Verbindung miteinander speichert, als ein Betriebsmodus eingestellt wurde.

## Revendications

1. Appareil terminal portable (1) ayant une section d'imagerie (6) qui capture (S10) une image (G) d'un sujet photographique (101) incluant un code-barres (102) et une section de décodage (11) qui décode (S13) le code-barres (102) sur la base de l'image capturée (G) du sujet photographique (101) capturée par la section d'imagerie (6) de façon à acquérir des informations d'identification,
une section de jugement (11) qui juge (S14) si l'image capturée (G) est appropriée comme cible d'enregistrement sur la base de l'image capturée (G), et
une section de commande de stockage (11) qui commande (S15) une section de stockage (13) pour stocker l'image capturée (G) jugée appropriée comme cible d'enregistrement par la section de jugement (11) et les informations d'identification acquises par la section de décodage (11) en association les unes avec les autres, **caractérisé en ce que** :
la section de décodage (11) décode le code-barres (102) dans une première condition de lecture de manière à acquérir les informations d'identification lorsqu'un premier mode dans lequel la section de stockage (13) doit être commandée pour stocker les informations d'identification sans qu'elles soient associées à l'image capturée (G) a été défini comme mode de fonctionnement, ou décode le code-barres (102) dans une seconde condition de lecture où l'image capturée doit être acquise à une résolution d'image supérieure à une résolution dans la première condition de lecture de façon à acquérir les informations d'identification lorsqu'un second mode dans lequel la section de stockage (13) doit être commandée pour stocker les informations d'identification et l'image capturée (G) en association les unes avec les autres a été défini comme mode de fonctionnement.

2. Appareil terminal portable (1) selon la revendication 1, **caractérisé en ce que** la seconde condition de lecture inclut une condition d'exécution de décodage pour déterminer s'il faut ou non effectuer le décodage du code-barres (102) par la section de décodage (11).

3. Appareil terminal portable (1) selon la revendication 2, **caractérisé en ce que** la condition d'exécution de décodage inclut une condition de précision de décodage sur au moins l'une d'une position du code-barres (102) dans l'image capturée (G), d'un rapport de contraste dans l'image capturée (G), de la netteté des bords dans le code-barres (102), d'une largeur du code-barres (102), et d'un angle d'inclinaison du code-barres (102).

4. Appareil terminal portable (1) selon l'une quelconque des revendications 1 à 3, **caractérisé en ce que** la seconde condition de lecture inclut une condition de précision de décodage sur la précision d'analyse lorsque l'image capturée (G) est analysée dans le décodage du code-barres (102) par la section de décodage (11).

5. Appareil terminal portable (1) selon l'une quelconque des revendications 1 à 4, **caractérisé en outre par** :
une section de commande d'imagerie qui, lorsque le second mode a été défini comme mode de fonctionnement, commande la section d'imagerie (6) pour capturer une image du sujet photographique (101) à une résolution supérieure à une résolution qui est définie lorsque le premier mode a été défini comme mode de fonctionnement.

6. Appareil terminal portable (1) selon l'une quelconque des revendications 1 à 5, **caractérisé en ce que** la section de jugement (11) juge que l'image capturée (G) est appropriée comme cible d'enregistrement (S14) lorsqu'un ticket de caisse ayant le code-barres est reconnu comme le sujet photographique sur la base de l'image capturée (G).

7. Appareil terminal portable (1) selon la revendication 1, **caractérisé en ce que** la section de décodage (11) effectue un décodage (S14) sur une zone limitée prédéterminée dans l'image capturée (G), sur la base d'un type de ticket de caisse (101) servant de sujet photographique (101) qui a été sélectionné par un utilisateur via une section d'entrée (6).

8. Appareil terminal portable (1) selon l'une quelconque des revendications 1 à 7, **caractérisé en ce que** le sujet photographique (101) est un ticket de caisse (101) incluant le code-barres (102).

9. Appareil terminal portable (1) selon l'une quelconque des revendications 1 à 8, **caractérisé en outre par** :
une section d'affichage (14) qui affiche (S12) l'image capturée (G) acquise à partir de la section d'imagerie (6).

10. Appareil terminal portable (1) selon la revendication 9, **caractérisé en ce que** la section d'affichage (14) affiche (S16) l'achèvement de l'acquisition des informations d'identification par la section de décodage (11).

11. Appareil terminal portable (1) selon l'une quelconque des revendications 1 à 10, **caractérisé en ce que** la section d'imagerie (6) inclut un capteur d'image (18), un dispositif de mise au point automatique (19), et un dispositif d'éclairage (20).

12. Procédé d'enregistrement d'informations incluant une étape consistant à capturer (S10) une image (G) d'un sujet photographique (101) et une étape consistant à décoder (S13) un code-barres (102) inclus dans le sujet photographique (101) sur la base de l'image capturée (G) du sujet photographique (101) de manière à acquérir des informations d'identification,
une étape consistant à juger (S14) si l'image capturée (G) est appropriée comme cible d'enregistrement sur la base de l'image capturée (G), et
une étape consistant à commander (S15) une section de stockage (13) pour stocker l'image capturée (G) jugée appropriée comme cible d'enregistrement et les informations d'identification acquises en association les unes avec les autres,
**caractérisé en ce que** :
dans l'étape d'acquisition des informations d'identification, le code-barres (102) est décodé dans une première condition de lecture de manière à acquérir les informations d'identification lorsqu'un premier mode dans lequel la section de stockage (13) doit être commandée pour stocker les informations d'identification sans qu'elles soient associées à l'image capturée (G) a été défini comme mode de fonctionnement, ou le code-barres (102) est décodé dans une seconde condition de lecture où l'image capturée doit être acquise à une résolution d'image supérieure à une résolution dans la première condition de lecture de façon à acquérir les informations d'identification lorsqu'un second mode dans lequel la section de stockage (13) doit être commandée pour stocker les informations d'identification et l'image capturée (G) en association les unes avec les autres a été défini comme mode de fonctionnement.

13. Support de stockage non transitoire lisible par ordinateur sur lequel est stocké un programme qui est exécutable par un processeur dans un appareil terminal portable (1) ayant une section d'imagerie (6) pour actualiser des fonctions incluant un traitement pour commander (S10) la section d'imagerie (6) pour capturer une image (G) d'un sujet photographique (101), un traitement pour décoder (S13) un code-barres (102) inclus dans le sujet photographique (101) sur la base de l'image capturée (G) du sujet photographique (101) de façon à acquérir des informations d'identification,
un traitement pour juger (S14) si l'image capturée (G) est appropriée comme cible d'enregistrement sur la base de l'image capturée (G), et
un traitement pour commander (S15) une section de stockage (13) pour stocker l'image capturée (G) jugée appropriée comme cible d'enregistrement et les informations d'identification acquises en association les unes avec les autres,
**caractérisé en ce que** :
dans le traitement pour acquérir les informations d'identification, le code-barres (102) est décodé dans une première condition de lecture de manière à acquérir les informations d'identification lorsqu'un premier mode dans lequel la section de stockage (13) doit être commandée pour stocker les informations d'identification sans qu'elles soient associées à l'image capturée (G) a été défini comme mode de fonctionnement, ou le code-barres (102) est décodé dans une seconde condition de lecture où l'image capturée doit être acquise à une résolution d'image supérieure à une résolution dans la première condition de lecture de façon à acquérir les informations d'identification lorsqu'un second mode dans lequel la section de stockage (13) doit être commandée pour stocker les informations d'identification et l'image capturée (G) en association les unes avec les autres a été défini comme mode de fonctionnement.
